(19) Europäisches Patentamt
European Patent Office
Office européen des brevets

(11) **EP 4 102 393 A1**

(12) **EUROPEAN PATENT APPLICATION**

(43) Date of publication:
**14.12.2022 Bulletin 2022/50**

(21) Application number: **22158507.8**

(22) Date of filing: **24.02.2022**

(51) International Patent Classification (IPC):
**G06F 30/20** *(2020.01)*     **G06F 113/24** *(2020.01)*
**G06F 119/14** *(2020.01)*

(52) Cooperative Patent Classification (CPC):
**G06F 30/20;** G06F 2113/24; G06F 2119/14

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.06.2021 JP 2021095222**

(71) Applicant: **KABUSHIKI KAISHA TOSHIBA**
**Minato-ku**
**Tokyo**
**105-0023 (JP)**

(72) Inventor: **TANAKA, Masayuki**
**Tokyo, 105-0023 (JP)**

(74) Representative: **Hoffmann Eitle**
**Patent- und Rechtsanwälte PartmbB**
**Arabellastraße 30**
**81925 München (DE)**

(54) **SIMULATION OF THE CONVEYANCE OF FLEXIBLE WEBS**

(57) According to an embodiment, a processing method simulates conveyance of at least one web sheet (2) conveyed in a conveying direction along a conveyance path (3) from an unwinder (4) to a winder (5). The processing method sets a conveyance velocity along the conveying direction as a velocity of a distal end node, which is an analysis node located at a distal end of the web sheet (2) in the conveying direction. After setting the conveyance velocity to the distal end node, the distal end node is deleted based on a movement of the distal end node by a prescribed distance (d1). The processing method updates the distal end node to an analysis node newly located at a distal end of the web sheet (2) based on the deletion of the distal end node.

F I G. 1

EP 4 102 393 A1

**Description**

FIELD

Embodiments described herein relate generally to a processing method, a processing device, and a processing program.

BACKGROUND

In conveyance of a web sheet, which is a flexible body formed in a sheet shape, a web sheet rolled in a roll shape is unwound from an unwinder. The unwound web sheet is conveyed along a conveyance path, and wound in a roll shape again by a winder. In the conveyance path, an intermediate roller to give tension to the web sheet is provided. Such a conveyance of the web sheet is called a roll-to-roll method. Since the web sheet is continuously conveyed from the unwinder to the winder in the roll-to-roll method, a technique capable of appropriately simulating the conveyance of the web sheet at any portion of the web sheet conveyance is required.

BRIEF DESCRIPTION OF THE DRAWINGS

FIG. 1 is a schematic diagram showing an example of conveyance of a web sheet simulated in a processing method according to an embodiment.
FIG. 2 is an explanatory diagram showing a model of a web sheet simulated in the processing method according to the embodiment.
FIG. 3 is a block diagram showing an example of a processing device which executes simulation by the processing method according to the embodiment.
FIG. 4 is an explanatory diagram explaining an example of simulation in which a movement of the web sheet model wound by a winder when the web sheet model is conveyed is simulated in the simulation by the processing method according to the embodiment.
FIG. 5 is an explanatory diagram explaining an example of simulation in which a movement of the web sheet model unwound from an unwinder when the web sheet model is conveyed is simulated in the simulation by the processing method according to the embodiment.
FIG. 6 is an explanatory diagram explaining another example of the simulation in which a movement of the web sheet model wound by the winder when the web sheet model is conveyed is simulated in the simulation by the processing method according to the embodiment.
FIG. 7 is an explanatory diagram explaining another example of the simulation in which a movement of the web sheet model unwound from the unwinder when the web sheet model is conveyed is simulated in the simulation by the processing method according to the embodiment.
FIG. 8 is a flowchart showing an example of simulation executed by the processing method according to the embodiment.
FIG. 9 is a flowchart showing an example of processing performed in calculation based on a dynamic model shown in the flowchart of FIG. 8.
FIG. 10 is a flowchart showing an example of processing for an analysis node performed in updating of the web sheet model shown in the flowchart of FIG. 8.
FIG. 11 is a flowchart showing an example of processing for the analysis node performed in updating of the web sheet model shown in the flowchart of FIG. 8, the processing being different from that in FIG. 10.
FIG. 12 is a flowchart showing an example of processing for the analysis node performed in updating of the web sheet model shown in the flowchart of FIG. 8, the processing being different from those in FIGS. 10 and 11.
FIG. 13 is a flowchart showing an example of processing for the analysis node performed in updating of the web sheet model shown in the flowchart of FIG. 8, the processing being different from those in FIGS. 10 to 12.

DETAILED DESCRIPTION

A problem to be solved by embodiments is to provide a processing method, a processing device, and a processing program capable of appropriately simulating roll-to-roll type web sheet conveyance.
According to an embodiment, the processing method simulates conveyance of a web sheet that is conveyed in a conveying direction along at least one conveyance path from an unwinder to a winder. The processing method sets a conveyance velocity along the conveying direction as a velocity of a distal end node, which is an analysis node located at a distal end of the web sheet in the conveying direction. After setting the conveyance velocity to the distal end node, the distal end node is deleted based on a movement of the distal end node by a first prescribed distance. The processing method updates the distal end node to an analysis node newly located at a distal end of the web sheet based on the deletion of the distal end node.

Hereinafter, an embodiment will be described with reference to the drawings. In a web sheet conveying device 1 of the present embodiment, a direction along a lateral direction of at least one web sheet 2 is a depth direction, and a direction along a conveyance path 3 in which the web sheet 2 is conveyed from an unwinder 4 to a winder 5 is a conveying direction. In addition, a direction along a thickness direction of the web sheet 2 is a direction intersecting (orthogonal or approximately orthogonal to) both the depth direction and the conveying direction. Accordingly, all these directions are defined by a relative positional relationship between the web sheet 2 and the conveyance path 3.

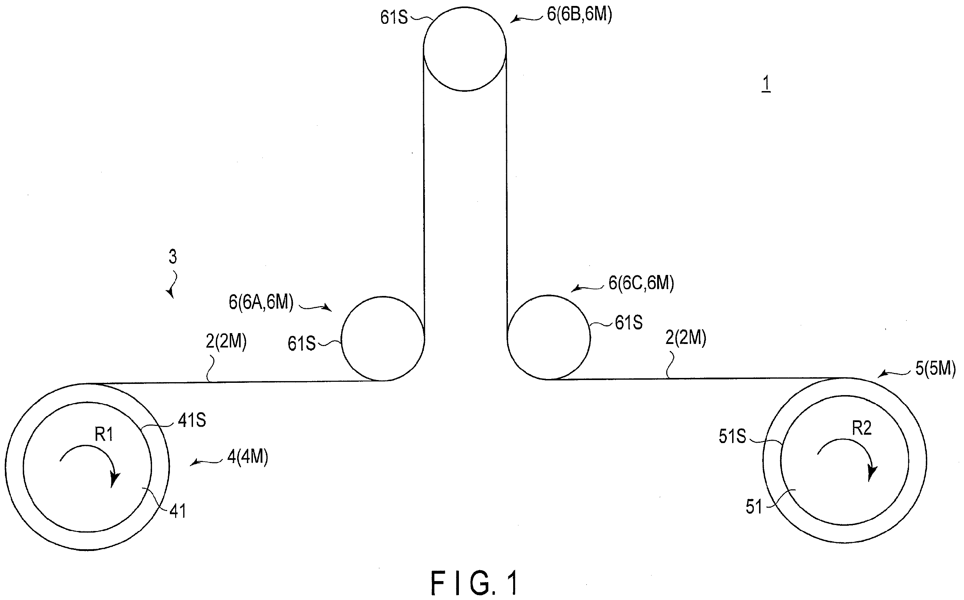

FIG. 1 is a schematic diagram showing an example of conveyance of a web sheet simulated in the processing method according to the embodiment. In the web sheet conveying device 1, the web sheet 2 is conveyed along the conveyance path 3. The web sheet 2 is a flexible body formed in a sheet shape. The web sheet conveying device 1 simulated in the processing method of the present embodiment employs a roll-to-roll method. Thus, the web sheet conveying device 1 includes the unwinder 4, the winder 5, and a guide 6. In the web sheet conveying device 1, the web sheet 2 is conveyed from the unwinder 4 to the winder 5 through the guide 6.

The unwinder 4 includes a core 41. The core 41 is formed along the lateral direction (short direction) of the web sheet 2. The unwinder 4 has, for example, a columnar or cylindrical shape. That is, the unwinder 4 extends along a longitudinal direction. The longitudinal direction of the unwinder 4 coincides or approximately coincides with the lateral direction of the web sheet 2. The web sheet 2 is wound in a roll shape on an outer peripheral surface 41S of the core 41 with the core 41 being as a central axis. The unwinder 4 is driven by a driving member (not shown) so that the core 41 rotates in one direction (a direction indicated by an arrow R1). Thereby, the web sheet 2 wound around the core 41 is unwound. The unwound web sheet 2 is carried in the conveyance path 3. Thus, in the web sheet conveying device 1, a side on which the unwinder 4 is located is a carry-in side of the conveyance path 3.

The winder 5 includes a winding core 51. The winding core 51 is formed along the lateral direction of the web sheet 2. The winder 5 has, for example, a columnar or cylindrical shape. That is, the winder 5 extends along a longitudinal direction. The longitudinal direction of the winder 5 coincides or approximately coincides with the lateral direction of the web sheet 2. The winder 5 is driven by a driving member (not shown) so that the winding core 51 rotates in one direction (a direction indicated by an arrow R2). Thereby, the web sheet 2 conveyed by the conveyance path 3 is wound in a roll shape on an outer peripheral surface 51S of the winding core 51 with the winding core 51 being as a central axis. The wound web sheet 2 is carried out from the conveyance path 3. Thus, in the web sheet conveying device 1, a side on which the winder 5 is located is a carry-out side of the conveyance path 3.

The guide 6 is provided between the unwinder 4 and the winder 5. The guide 6 is formed along the lateral direction of the web sheet 2. The guide 6 has, for example, a columnar or cylindrical shape. That is, the guide 6 extends along a longitudinal direction. The longitudinal direction of the guide 6 coincides or approximately coincides with the lateral direction of the web sheet 2. In the guide 6, an outer peripheral surface 61S contacts the web sheet 2. Thus, the guide 6 rotates in one direction by the web sheet 2 being conveyed along the conveyance path 3. Thereby, the guide 6 guides the web sheet 2 along the conveyance path 3. The guide 6 is, for example, an intermediate roller. In an example of FIG. 1, three guides 6A to 6C are provided in the web sheet conveying device 1.

In the example of FIG. 1, the conveyance path 3 extends along a horizontal direction from the unwinder 4 to the guide 6A, extends along a vertical direction from the guide 6A to the guide 6B and from the guide 6B to the guide 6C, and extends along the horizontal direction from the guide 6C to the winder 5. The conveyance path 3 is not particularly limited thereto, and it suffices that it extends from the unwinder 4 to the winder 5. Thus, between the unwinder 4 and the winder 5, the conveyance path 3 may be folded or folded back, and the extending direction of the conveyance path 3 may be changed.

In the simulation by the processing method of the present embodiment, the web sheet conveying device 1 shown in FIG. 1 is simulated. In the simulation of the web sheet conveying device 1, the web sheet 2 to be conveyed, the unwinder 4, the winder 5, and the guide 6 are modeled as a web sheet model 2M, an unwinder model 4M, a winder model 5M, and a guide model 6M, respectively.

A level of modeling (a model level) of structural elements of the web sheet conveying device 1 may be adjusted according to a purpose of simulation. The model level is an index indicating how minutely an object to be modeled is simulated as a model. The higher the model level, the more minutely the model simulates the object to be modeled. In one example, when analyzing a state in which the web sheet 2 is conveyed, a model level of the web sheet model 2M is set to be higher than those of the unwinder model 4M, the winder model 5M, and the guide model 6M. In another example, in order to analyze the state in which the web sheet 2 is conveyed more minutely, the model levels of all the unwinder model 4M, the winder model 5M, the guide model 6M, and the web sheet model 2M are set to be high.

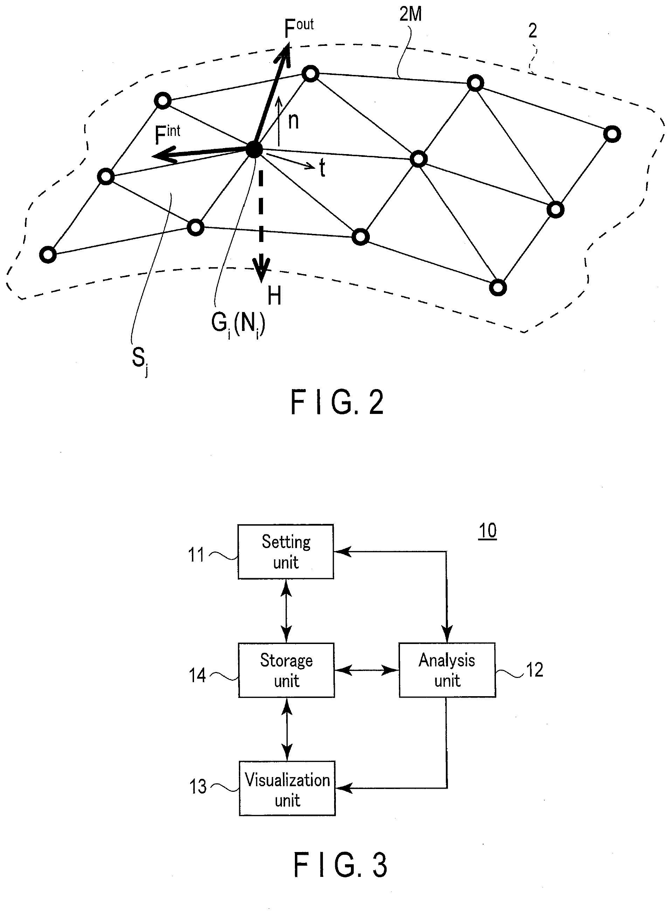

Next, a model of the web sheet conveying device 1 used in the simulation by the processing method of the present embodiment will be described. In the present processing method, a force applied to the web sheet 2 of the web sheet conveying device 1 shown in FIG. 1 is simulated based on a dynamic model to be described later. FIG. 2 is an explanatory diagram explaining a dynamic model of the web sheet conveying device 1 simulated in the processing method according to the embodiment. FIG. 2 shows a part of the web sheet model 2M. In FIG. 2, the web sheet 2 before being modeled is indicated by a broken line.

In the present dynamic model, the web sheet 2 is described as the web sheet model 2M using a plurality of planes $S_j$ (j = 1, 2, ..., and m) defined by a plurality of grid points Gi (i = 1, 2, ..., and n). In the web sheet model 2M, at least a surface of the web sheet 2 is modeled. As shown in an example of FIG. 2, in the web sheet model 2M of the present embodiment, a layer of grip points are set in the thickness direction of the web sheet 2. The number of layers of grid points in the thickness direction of the web sheet 2 can be appropriately adjusted depending on a purpose of simulation, etc. The grip point Gi is expressed by a coordinate, but is not limited thereto as long as information from which the grip point Gi can be specified in a three-dimensional space is used. In the present embodiment, the coordinate of the grip point Gi is expressed by a Cartesian coordinate system. In this case, the coordinate of the grip point Gi is expressed by a combination of three numerical values $x_i$, yi, and zi as shown in equation (1). Note that when the grip point Gi is defined as an internal coordinate (a local coordinate) of the web sheet model 2M, the grip point Gi is defined in association with a coordinate (a global coordinate) in the entire simulation model. In one example, the local coordinate is associated with the global coordinate one-to-one by a conversion matrix to convert a local coordinate into a global coordinate.

$$G_i = (x_i, y_i, z_i) \qquad (1)$$

At this time, the Plane $S_j$ is defined by at least three grip points. In the present embodiment, as shown in equation (2), the plane $S_j$ is defined by three grip points $G_p$, $G_q$, and $G_r$ (p, q, and r are mutually different values, and are any values of 1 to n). Accordingly, the plane $S_j$ is a triangle. However, the plane $S_j$ is not limited thereto as long as it can be defined using the grip point Gi. The plane $S_j$ can be appropriately set in consideration of a calculation cost, etc. The plane $S_j$ may include two or more shapes.

$$S_j = \left( G_p, G_q, G_r \right) \qquad (2)$$

In the same manner as the web sheet 2, at least a surface of each of the unwinder 4, the winder 5, and the guide 6 is modeled. That is, the unwinder 4 is described as the unwinder model 4M using a plurality of planes $S^{uw}_j$ (j = 1, 2, ..., and $m^{uw}$) defined by a plurality of grid points $G^{uw}_i$ (i = 1, 2, ..., and $n^{uw}$). The winder 5 is described as the winder model 5M using a plurality of planes $S^w_j$ (j = 1, 2, ..., and $m^w$) defined by a plurality of grid points $G^w_i$ (i = 1, 2, ..., and $n^w$). The guide 6 is described as the guide model 6M using a plurality of planes $S^g_j$ (j = 1, 2, ..., and $m^g$) defined by a plurality of grid points $G^g_i$ (i = 1, 2, ..., and $n^g$).

In the web sheet model 2M, in order to describe a force $F^{total}$ acting on the web sheet model 2M, an analysis node Ni (i = 1, 2, ..., and ns) is set as a mass point to the grid point Gi. Thus, a predetermined number of analysis nodes Ni are preferably set in the lateral direction (short direction) of the web sheet model 2M. In one example, 20 or more analysis nodes Ni are arranged in the lateral direction of the web sheet model 2M. In this web sheet model 2M, a force (internal force) $F^{int}$ acting in an inner portion of the web sheet model 2M and a force (external force) $F^{out}$ acting on the web sheet model 2M from an outer portion of the web sheet model 2M are taken into consideration. That is, the force $F^{total}$ acting on the web sheet model 2M is a sum of the internal force $F^{int}$ and the external force $F^{out}$. Then, the force $F^{total}$ acting on the web sheet model 2M is represented as a force $F^{total}_i$ acting on the analysis node $N_i$. In addition, the internal force $F^{int}$ is represented as an internal force $F^{int}_i$ acting on the analysis node Ni, and the external force $F^{out}$ is represented as an external force $F^{out}_i$ acting on the analysis node Ni. That is, the force $F^{total}_i$ acting on the analysis node $N_i$ is expressed by equation (3).

$$F^{total}_i = F^{int}_i + F^{out}_i \qquad (3)$$

In the analysis node Ni, a coordinate Gi, a mass mi, a velocity vi, and connection information Ci to be described later are set. The coordinate $G_i$ is the same data as the grid point Gi. The mass mi corresponds to a mass of the web sheet 2 at the grid point Gi. The velocity vi represents a velocity at the grid point Gi. In the present embodiment, since the coordinate is expressed by the Cartesian coordinate system, the velocity vi is also expressed by equation (4) in the same manner.

$$v_i = \left( vx_i, vy_i, vz_i \right) \qquad\qquad (4)$$

A force acting on the inner portion of the web sheet 2 is described as a force acting on an analysis node as described above. In the present embodiment, the force acting in the inner portion of the web sheet 2 is approximated by a force acting between the analysis nodes $N_i$. Of all the analysis nodes $N_1$, $N_2$, ..., and $N_n$ set in the web sheet model 2M, a force $f_{pq}$ acting on a certain analysis node $N_p$ (p is any value of 1 to n) from another analysis node $N_q$ (q is any value of 1 to n except for p) is, for example, approximated by equation (5-1) and equation (5-2) as a force in accordance with Hooke's law. Here, $k_{pq}$ is a spring constant between the analysis node $N_p$ and the analysis node $N_q$, $G_p$ is a coordinate of the analysis node $N_p$, and $G_q$ is a coordinate of the analysis node $N_q$. In addition, $L_{pq}$ represents an absolute value of a distance between the analysis node $N_p$ and the analysis node $N_q$, and $L_{pq}{}^0$ represents an absolute value of a distance between the analysis node $N_p$ and the analysis node $N_q$ at the start of simulation.

$$f_{pq} = k_{pq}\left( L_{pq} - L_{pq}^0 \right) \frac{G_q - G_p}{L_{pq}} \qquad\qquad (5-1)$$

$$L_{pq} = \left| G_q - G_p \right| \qquad\qquad (5-2)$$

Accordingly, a force acting on the certain analysis node $N_p$ between itself and each of all the other analysis nodes $N_q$ is expressed by equation (6).

$$F^{\mathrm{int}}_p = \sum_{i \neq p} f_{pi} \qquad\qquad (6)$$

Here, a force $F_p$ acting on the certain analysis node $N_p$ is approximated by a force acting between itself and another analysis node $N_r$ (r is any value of 1 to n except for p) arranged in the vicinity of the analysis node $N_p$. That is, in the force $F_p$ acting on the certain analysis node $N_p$, a contribution of a force acting between itself and another analysis node $N_r$ arranged in the vicinity of the certain analysis node $N_p$ is large. In this case, the force $F_p$ is approximately expressed by equation (7). Here, R is an aggregate consisting of r of the analysis nodes $N_r$.

$$F^{\mathrm{int}}_p \approx \sum_{i \in R} f_{pi} \qquad\qquad (7)$$

Note that the another analysis node $N_r$ taken into consideration in equation (7) approximately expressing the force acting on the certain analysis node $N_p$ is set by connection information $C_p$ indicating a relationship between p and r. The connection information is expressed by a combination of p and r. The number of pieces of connection information $C_p$ set in the certain analysis node $N_p$ is not particularly limited, and can be appropriately set in consideration of a calculation cost, etc. The larger the number of pieces of connection information $C_p$ of the certain analysis node $N_p$, the larger the number of other analysis nodes $N_r$ used for calculation of the force $F_p$ acting on the certain analysis node $N_p$. In this case, in the web sheet model 2M, the force $F_p$ acting on the certain analysis node $N_p$ is described using a force $f_{pr}$ between itself and more analysis nodes $N_r$.

A force acting on the web sheet 2 from the outer portion of the web sheet 2 is described as a force acting on an analysis node as described above. The force acting on the web sheet 2 from the outer portion of the web sheet 2 is, for example, a force acting between the web sheet 2 and the unwinder 4, a force acting between the web sheet 2 and the winder 5, and a force acting between the web sheet 2 and the guide 6. In the web sheet conveying device 1 shown in FIG. 1, the web sheet 2 is stretched between the unwinder 4 and the winder 5, and the guide 6 contacts the web sheet 2 from one side of the thickness direction of the web sheet 2. That is, the web sheet 2 receives drag along a direction separating from the surface of the guide 6. In addition, since the web sheet 2 is conveyed while contacting the guide 6, the web sheet 2 receives a frictional force along a direction opposite to the conveying direction of the web sheet 2 from the guide 6. Accordingly, in the web sheet model 2M and the guide model 6M, a force received by an analysis node Ni set in the web sheet model 2M from the guide model 6M is expressed by equation (8) and equation (9). Here, n is a normal vector for a surface of the guide model 6M, t is a unit vector toward a tangential direction of the surface of the guide model 6M, vti is a velocity of a vector t direction of the analysis node $N_i$, mi is a mass set in the analysis node $N_i$, and $\mu$ is a friction coefficient. Further, $\Delta t$ is a time width of a time step used in analysis of the web sheet 2.

$$F^{\text{out}}_i = -\frac{m_i}{\Delta t}(n \otimes n)v_i + \Gamma_i \qquad (8)$$

$$\Gamma_i = \begin{cases} \dfrac{m_i}{\Delta t}|v_{ti}|t & (|v_{ti}| < \mu|v_i \cdot n|) \\[3mm] -\mu\dfrac{m_i}{\Delta t}(v_i \cdot n)t & (|v_{ti}| \geq \mu|v_i \cdot n|) \end{cases} \qquad (9)$$

Here, whether or not the web sheet 2 and the guide 6 contact each other is determined by a distance between the web sheet model 2M and the guide model 6M. As described above, the web sheet model 2M is expressed by a plurality of grid points Gi, and the guide model 6M is expressed by a plurality of grid points $G^g_i$. Using these grid points $G_i$ and $G^g_i$, the distance between the web sheet model 2M and the guide model 6M is calculated for each grid point Gi. For example, when a distance between a certain grid point $G_p$ of the web sheet model 2M and a certain grid point $G^g_q$ of the guide model 6M is $d_{pq}$, if the distance $d_{pq}$ is a predetermined threshold value or less, the grid point $G_p$ contacts the guide model 6M. On the other hand, if the distance $d_{pq}$ exceeds the predetermined threshold value, the grid point $G_p$ does not contact the guide model 6M. Further, an analysis node $N_p$ is set in the grid point $G_p$, and a force received by the web sheet 2 is described as a force received by the analysis node $N_p$. Thus, if the distance $d_{pq}$ is the predetermined threshold value or less, an external force $F^{\text{out}}_p$ is calculated in the analysis node $N_p$, and if the distance $d_{pq}$ exceeds the predetermined threshold value, the external force $F^{\text{out}}_p$ is not calculated in the analysis node $N_p$.

When the guide 6 contacts the web sheet 2 as described above, the guide 6 receives a force from the web sheet 2. In the present embodiment, the web sheet model 2M receives the force based on equation (8) and equation (9) between itself and the guide model 6M. Accordingly, a force H received by the guide model 6M is expressed by equation (10). Here, CN is an aggregate of analysis nodes $N_i$ contacting the guide model 6M. That is, the force received by the guide model 6M has the same magnitude as that of an external force received by each of the analysis nodes $N_i$ contacting the guide model 6M, and is a sum of forces directed in a direction opposite to the external force.

$$H = -\sum_{i \in CN} F^{\text{out}}_i \qquad (10)$$

Based on the dynamic model as described above, the web sheet conveying device 1 is simulated in the present embodiment. In the simulation of the present embodiment, a movement of the web sheet 2 being conveyed from the unwinder 4 to the winder 5 is simulated for each time step having a predetermined time width $\Delta t$. That is, simulation in the time step having the predetermined time width $\Delta t$ is repeatedly executed, so that the movement of the web sheet 2 being conveyed from the unwinder 4 to the winder 5 is simulated. The predetermined time width $\Delta t$ is, for example, $1.0 \times 10^{-5}$ seconds. When simulation is executed based on the above-described dynamic model in the $k^{\text{step}}$th time step, an analysis node Ni receives the force expressed by equation (3) so that a coordinate Gi and a velocity vi change. At this time, a coordinate Gi and a velocity vi in the $(k^{\text{step}} + 1)$th time step, which is the next time step, are expressed by equation (11) and equation (12). Here, a coordinate $G_i(k^{\text{step}})$ represents a position of the analysis node Ni in the $k^{\text{step}}$th time step, a velocity vi $(k^{\text{step}})$ represents a velocity of the analysis node $N_i$ in the $k^{\text{step}}$th time step, a coordinate $G_i(k^{\text{step}} + 1)$ represents a position of the analysis node $N_i$ in the $(k^{\text{step}} + 1)$th time step, and a velocity $v_i(k^{\text{step}} + 1)$ represents a velocity of the analysis node Ni in the $(k^{\text{step}} + 1)$th time step.

$$v_i(k^{\text{step}} + 1) = v_i(k^{\text{step}}) + \frac{\Delta t}{m_i}F^{\text{total}}_i \qquad (11)$$

$$G_i(k^{\text{step}} + 1) = G_i(k^{\text{step}}) + v_i(k^{\text{step}} + 1)\Delta t \qquad (1\,2)$$

Further, when simulation is executed based on the above-described dynamic model in the $k^{\text{step}}$th time step, the guide model 6M rotates by receiving the force expressed by equation (10). At this time, an angular velocity $\omega$ and a rotation angle $\theta$ of the guide model 6M in the ($k^{\text{step}}$ + 1)th time step, which is the next time step, are expressed by equation (13) and equation (14). Here, $\omega(k^{\text{step}})$ represents an angular velocity of the guide model 6M in the $k^{\text{step}}$th time step, $\theta(k^{\text{step}})$ represents a rotation angle of the guide model 6M in the $k^{\text{step}}$th time step, $\omega(k^{\text{step}} + 1)$ represents an angular velocity of the guide model 6M in the ($k^{\text{step}}$ + 1)th time step, and $\theta(k^{\text{step}} + 1)$ represents a rotation angle of the guide model 6M in the ($k^{\text{step}}$ + 1)th time step. Further, I represents an inertia tensor of the guide model 6M, $\tau$ represents torque related to the guide model 6M, and z represents a unit vector of a direction along a rotation axis of the guide model 6M.

$$\omega(k^{\text{step}} + 1) = \omega(k^{\text{step}}) + \Delta t I^{-1} \tau \qquad (1\,3)$$

$$\theta(k^{\text{step}} + 1) = \theta(k^{\text{step}}) + \Delta t [\omega(k^{\text{step}} + 1) \cdot z] \qquad (1\,4)$$

Next, a simulation system for executing simulation by the processing method of the present embodiment will be described. FIG. 3 shows a block diagram of a simulation system 10 by the processing method according to the embodiment. The simulation system 10, for example, simulates the web sheet conveying device 1 shown in FIG. 1. The simulation system 10 includes a setting unit 11, an analysis unit 12, a visualization unit 13, and a storage unit 14.

The simulation system 10 is, for example, formed by a processing device. The processing device includes a processor and a storage medium (non-transitory storage medium). The processor performs processing of the setting unit 11, the analysis unit 12, and the visualization unit 13, and the storage medium is the storage unit 14. The processing device is, for example, a computer, a smart device, etc. The processor includes any one of a central processing unit (CPU), a graphical processing unit (GPU), an application specific integrated circuit (ASIC), a microcomputer, a field programmable gate array (FPGA), a digital signal processor (DSP), etc. In the storage medium, an auxiliary storage device can be included, in addition to a main storage device such as a memory. Examples of the storage medium include a magnetic disc, an optical disk (CD-ROM, CD-R, DVD, etc.), a magneto-optical disk (MO, etc.), and a semiconductor memory (USB memory, SSD, etc.).

A processing device may include one or more processors and storage media. The processor performs processing of the setting unit 11, the analysis unit 12, and the visualization unit 13 by executing a program stored in the storage medium, etc. The program executed by the processor may be stored in a processing device connected via a network. The network is, for example, a wired local area network (LAN), a wireless LAN, etc. The processing device connected through a network is a computer, a server, a server in a cloud environment, etc. In this case, the processor downloads the program via the network.

A processing device may be a cloud server constructed in a cloud environment. In this case, the infrastructure of the cloud environment is constructed by a virtual processor such as a virtual CPU and a cloud memory. The virtual processor performs processing of the setting unit 11, the analysis unit 12, and the visualization unit 13. The cloud memory functions as the storage unit 14. Note that the storage unit 14 may be, for example, provided in another processing device than the setting unit 11, the analysis unit 12, and the visualization unit 13. In one example, another processing device is a computer, etc. different from the setting unit 11, the analysis unit 12, and the visualization unit 13. In this case, the setting unit 11, the analysis unit 12, and the visualization unit 13 are connected to the computer provided with the storage unit 14, etc. via a network.

The processing device may be provided with a user interface. In the user interface, various kinds of operations, etc. are input by a user, and information, etc. to be reported to the user is reported through a display, etc. The user interface can be a display part such as a display, or an input part such as a touch panel or a keyboard. The user interface may be, for example, provided separately from the setting unit 11, the analysis unit 12, the visualization unit 13, and the storage unit 14.

The setting unit 11 sets simulation information required for simulation of the web sheet conveying device 1 by the simulation system 10. The simulation information includes web sheet information, unwinder information, winder information, and guide information. The setting unit 11 sets the simulation information in advance before the simulation of the web sheet conveying device 1 by the simulation system 10 is executed. The simulation information is, for example, appropriately set by a user of the simulation system 10 using the user interface provided in the processing device. Note that predetermined information may be set in the simulation information in advance as default information of the simulation system 10. In this case, the user of the simulation system 10 can update the preset predetermined information to information suitable for simulation to be executed by using the user interface. This simulation information is appropriately set in the setting unit 11 and then written and stored in the storage unit 14.

The web sheet information includes web sheet physical property data and web sheet shape data. The web sheet physical property data includes a density of the web sheet 2, a rigidity index of the web sheet 2, and a friction coefficient of the web sheet 2. The rigidity index of the web sheet 2 is, for example, a Young's modulus of the web sheet 2. The web sheet shape data is data indicating a shape of the web sheet 2. The web sheet shape data includes web sheet surface mesh data and a thickness of the web sheet. The web sheet surface mesh data includes web sheet vertex data and web sheet plane data. The web sheet vertex data is set based on a surface shape of the web sheet 2. The web sheet vertex data is data corresponding to the above-described grid point Gi in the web sheet model 2M. Accordingly, the web sheet vertex data includes coordinate information, and, for example, includes data expressed by the above-described equation (1). In the present embodiment, the number of web sheet vertex data pieces is n as described above, but is not particularly limited thereto. It suffices that the number of pieces that allows the surface shape of the web sheet 2 to be properly described in the simulation system 10 is set. In addition, the web sheet plane data is data corresponding to the above-described plane $S_j$ in the web sheet model 2M. Accordingly, the web sheet plane data includes information about a plurality of grid points Gi constituting the plane $S_j$. In the present embodiment, the web sheet plane data includes information of three grid points constituting the plane $S_j$ (see the above-described equation (2)). Further, in the present embodiment, the number of web sheet plane data pieces is m as described above.

To the web sheet vertex data and the web sheet plane data, a web sheet vertex ID and a web sheet plane ID are set, respectively. One unique web sheet vertex ID is set to one piece of web sheet vertex data, and one unique web sheet plane ID is set to one piece of web sheet plane data. In one example, integers different from one another are set as the web sheet vertex IDs, and integers different from one another are set as the web sheet plane IDs. Specifically, 0, 1, 2, ..., and n-1 are set in the respective pieces of web sheet vertex data as the web sheet vertex IDs, and 0, 1, 2, ..., and m-1 are set in the respective pieces of web sheet plane data as the web sheet plane IDs. The web sheet vertex IDs and the web sheet plane IDs are set in this way so that a vertex defining a certain plane $S_j$ is associated by the web sheet plane ID and the web sheet vertex ID of the certain plane $S_j$. As such, the web sheet 2 is modeled based on the web sheet surface mesh data and simulated as the web sheet model 2M.

The guide information includes guide physical property data, guide shape data, and guide control information. The guide physical property data includes information about an inertia tensor of the guide 6 and information about an attenuation coefficient of the guide 6. The guide shape data is data indicating the shape of the guide 6. The guide shape data includes guide surface mesh data and data related to a rotation axis of the guide. The guide surface mesh data includes guide vertex data and guide plane data. The guide vertex data is set based on a surface shape of the guide 6. The guide vertex data is data corresponding to the above-described grid point $G^g{}_i$ in the guide model 6M. The guide plane data is data corresponding to the above-described plane $S^g{}_i$ in the guide model 6M. In the same manner as the web sheet surface mesh data, the guide surface data associates the guide vertex data with the guide plane data. Thereby, the guide 6 is modeled based on the guide surface mesh data and simulated as the guide model 6M. The guide control information includes the presence or absence of control related to a translational movement and rotation of the guide and a control method.

The analysis unit 12 executes simulation of a force acting on the web sheet 2 based on the above-described dynamic model. The analysis unit 12 sets an analysis node $N_i$ based on the above-described information set by the setting unit 11. Specifically, the analysis unit 12 reads web sheet surface mesh data from the storage unit 14. The analysis unit 12 sets the analysis node Ni as described above based on web sheet vertex data of the read web sheet surface mesh data. Furthermore, the analysis unit 12 sets a grip point Gi, a mass $m_i$, a velocity $v_i$, and connection information Ci used in the above-described dynamic model for each set analysis node Ni. The coordinate Gi is a coordinate of web sheet vertex data by which the analysis node Ni is set. The mass mi is, for example, set based on density information of the web sheet 2. In one example, the connection information Ci is set between a certain analysis node Ni and another analysis node located around the certain analysis node Ni. In another example, the connection information Ci is set between a certain analysis node Ni and another analysis node present within a predetermined distance from the certain analysis node Ni.

Upon completing the setting of the information about the analysis node Ni in this way, the analysis unit 12 calculates a force $F^{total}{}_i$ acting on the analysis node Ni based on equation (3). An internal force $F^{int}{}_i$ acting on the analysis node Ni is calculated based on equation (7) between the analysis node Ni and an analysis node included in the connection information Ci. An external force $F^{out}{}_i$ acting on the analysis node $N_i$ is calculated based on equation (8) and equation (9). However, in the simulation of the web sheet conveying device 1, calculation is executed for each time step having a time width $\Delta t$. Thus, $\Delta t$ in equation (8) and equation (9) is a time width $\Delta t$ of a time step.

The analysis unit 12 updates the velocity vi and the coordinate Gi of the analysis node Ni based on equation (11) and equation (12). The analysis unit 12 completes calculation in one time step related to the analysis node Ni in this way.

The visualization unit 13 visualizes the web sheet model 2M using web sheet surface data based on a calculation result of the analysis unit 12. A method of visualizing the web sheet model 2M is not particularly limited thereto. It suffices that the web sheet model 2M can be visualized by a method that allows the user of the simulation system 10 to recognize a movement of the web sheet model 2M. That is, the visualization unit 13 may visualize the web sheet model 2M as image data, or visualize the web sheet model 2M as moving image data. In addition, in the visualized web sheet model 2M, the force $F^{total}_i$ acting on the analysis node Ni may also be visualized in a manner overlapping the web sheet model 2M. Note that the visualization unit 13 may output and store displayed data in the storage unit 14.

In one example, the force $F^{total}_i$ acting on the analysis node Ni may be displayed on the web sheet model 2M with a color corresponding to the magnitude of the force $F^{total}_i$. In another example, a direction of the force $F^{total}_i$ may be displayed as a direction of an arrow, and the magnitude of the force $F^{total}_i$ may be displayed as a size of the arrow, on the web sheet model 2M. The visualization unit 13 may read a calculation result for each time step from the storage unit 14 and continuously display the calculation result for each time step according to a progress of the time step. By visualizing the movement of the web sheet model 2M in this way, the user of the simulation system 10 can visually recognize a change over time in the force applied to the web sheet 2 in the web sheet conveying device 1.

Next, in the simulation system 10 of the present embodiment, a method of simulating the roll-to-roll type web sheet conveying device 1 will be described. In the roll-to-roll type web sheet conveying device 1, the web sheet 2 is unwound from the unwinder 4, and the web sheet 2 is wound by the winder 5. At this time, a portion of the web sheet 2 that is wound by the winder 5 winds around the winder 5 and rotates together with the winder 5. In this state, it is assumed that the portion of the web sheet 2 that is rotating together with the winder 5 has the same velocity as that of a contact point of the winder. Similarly, the web sheet 2 before being unwound from the unwinder 4 winds around the unwinder 4 and rotates together with the unwinder 4. In this state, it is assumed that a portion of the web sheet 2 that is rotating together with the unwinder 4 has the same velocity as that of a contact point of the unwinder. Therefore, in the simulation system 10, the simulation is executed as described above with a portion of the web sheet 2 not contacting the unwinder 4 and the winder 5 as the web sheet model 2M, and the guide 6 contacting the web sheet model 2M as the guide model 6M. Then, a boundary condition may be given so that velocities of the portions of the web sheet 2 contacting the unwinder 4 and the winder 5 match velocities of the unwinder 4 and the winder 5. At this time, in the simulation system 10, simulation of unwinding of the web sheet 2 and winding of the web sheet 2 becomes a problem. In the present embodiment, as will be described below, it is possible to simulate the unwinding of the web sheet 2 and the winding of the web sheet 2 by appropriately modeling a movement of the unwinder 4 and/or a movement of the winder 5.

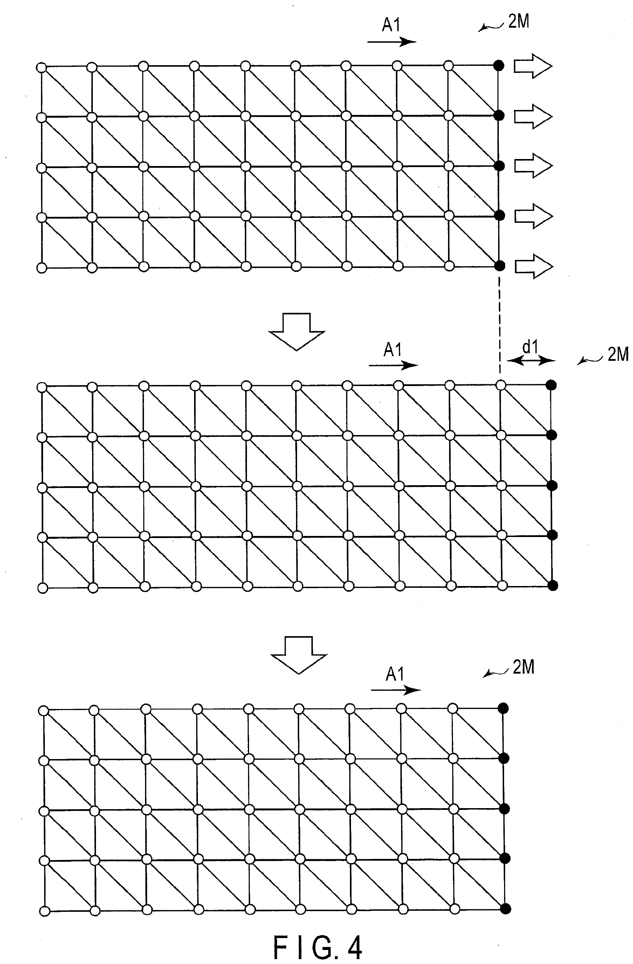

FIG. 4 is an explanatory diagram explaining a method of simulating a movement of the web sheet 2 being wound around the winder 5 when the web sheet 2 is conveyed in the simulation by the processing method according to the embodiment. FIG. 4 shows the web sheet model 2M that models the web sheet 2 in a posture viewed from one side in the thickness direction of the web sheet 2. Further, a direction in which the web sheet model 2M is conveyed is indicated by an arrow A1. When the web sheet 2 is wound by the winder 5, the analysis unit 12 sets a predetermined velocity (conveyance velocity) as a velocity of a distal end node. This forces the distal end node to move along the conveying direction. Then, assuming the force received by the web sheet 2 as described above, the web sheet 2 is in a state where the conveyance velocity is forcibly given, and the wound web sheet 2 does not exert a force on the unwound web sheet. In the present embodiment, such a change is described by deleting the distal end node from the web sheet model 2M based on the fact that an analysis node (the distal end node, indicated by a black circle in FIG. 4) provided at a distal end of the conveying direction in the web sheet model 2M has moved by a prescribed distance (a first prescribed distance) d1. That is, a portion of the web sheet 2 represented by the deleted distal end node is wound by the winder 5.

The distal end node deleted at this time is, for example, all distal end nodes arranged along the lateral direction of the web sheet model 2M. When these analysis nodes are deleted, the analysis unit 12 selects (updates), as a distal end node, an analysis node that is newly located at a distal end of the conveying direction in the web sheet model 2M due to the deletion of the analysis node. In this way, the analysis unit 12 can simulate a situation in which the web sheet 2 is wound around the winder 5 by repeating the velocity setting of the distal end node, the deletion of the distal end node, and the updating of the distal end node.

Based on the deletion of the distal end node, connection information of an analysis node that has received the force between itself and the distal end node is updated. That is, the connection information between that analysis node and the distal end node is deleted. Further, the first prescribed distance d1 can be appropriately set by the user of the simulation system 10 through the setting unit 11. The first prescribed distance d1 is, for example, 5 mm.

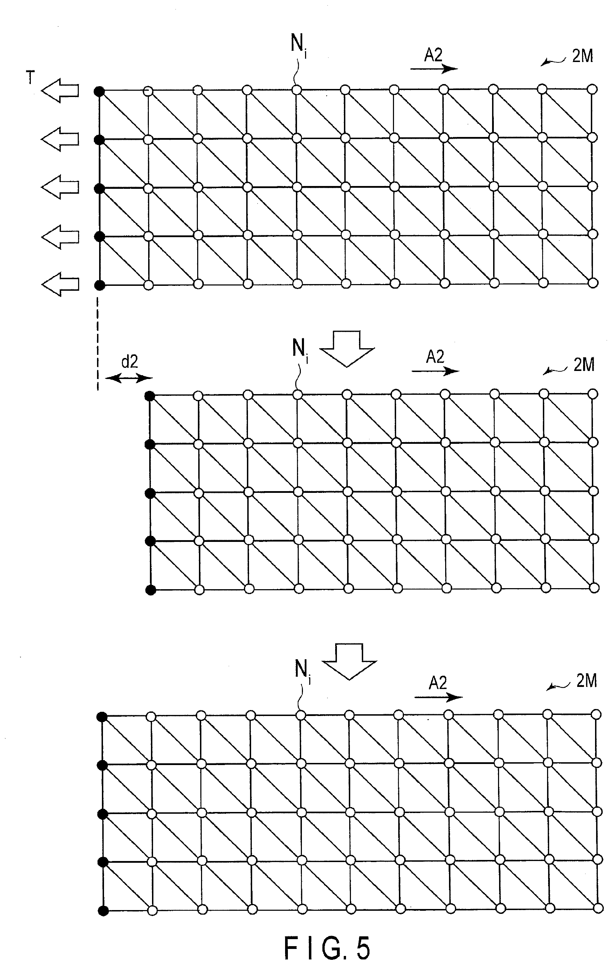

FIG. 5 is an explanatory diagram explaining a method of simulating a movement of the web sheet 2 being unwound from the unwinder 4 when the web sheet 2 is conveyed in the simulation by the processing method according to the embodiment. FIG. 5 shows the web sheet model 2M that models the web sheet 2 in a posture viewed from one side in the thickness direction of the web sheet 2. In addition, the direction in which the web sheet model 2M is conveyed is indicated by an arrow A2. When the web sheet 2 is wound by the winder 5 as described above, the entire web sheet 2 moves along the conveying direction. The analysis unit 12 sets a predetermined force T as an external force applied to an analysis node (a proximal end node, indicated by a black circle in FIG. 5) provided at a proximal end of the conveying direction in the web sheet model 2M. Since the external force applied to the proximal end node describes a situation in which the web sheet 2 in a stretched state is unwound from the unwinder 4, the force T is applied toward a direction opposite to the conveying direction. That is, the external force applied to the proximal end node corresponds to, for example, a tension acting on the web sheet 2.

Then, a predetermined amount of the web sheet 2 is unwound from the unwinder 4. In the present embodiment, such a change is described by adding a new analysis node to the direction opposite to the conveying direction with respect to the proximal end node based on a movement of the proximal end node by a prescribed distance (a second prescribed distance) d2. That is, a portion of the web sheet 2 represented by the added analysis node is unwound from the unwinder 4. When the analysis node is added, the analysis unit 12 selects (updates) the added analysis node as a proximal end node. In this way, the analysis unit 12 can simulate the situation in which the web sheet 2 is unwound from the unwinder 4 by repeating the addition of the proximal end node, the updating of the proximal end node, and the setting of the external force of the proximal end node.

Based on the addition of the proximal end node, connection information of an analysis node that newly receives a force between itself and the proximal end node is updated. That is, the connection information between that analysis node and the proximal end node is added. Further, the second prescribed distance d2 can be appropriately set by the user of the simulation system 10 through the setting unit 11. The second prescribed distance d2 is, for example, 5 mm.

As described above, in the simulation system 10, a distal end node provided in the web sheet model 2M is deleted based on the fact that the distal end node has moved by the first prescribed distance d1, and a new proximal end node is added based on the fact that a proximal end node provided in the web sheet model 2M has moved by the second prescribed distance d2. As a result, the simulation system 10 can appropriately simulate the web sheet 2 conveyed in the conveying direction along the conveyance path from the unwinder 4 to the winder 5. However, the movement of the web sheet 2 being wound by the winder 5 and the movement of the web sheet 2 being unwound from the unwinder 4 are described briefly by the deletion of the analysis node from the web sheet model 2M and the addition of the analysis node to the web sheet model 2M. As described above, in the present embodiment, the unwinder 4 is modeled as the unwinder model 4M, and the winder 5 is modeled as the winder model 5M. Therefore, in the following, a method of simulating the unwinding of the web sheet 2 and/or the winding of the web sheet 2 will be described using the unwinder model 4M and/or the winder model 5M.

In this case, the unwinder information includes unwinder shape data. The unwinder shape data is data indicating the shape of the unwinder 4. The unwinder shape data includes unwinder surface mesh data and data regarding a rotation axis of the unwinder. The unwinder surface mesh data includes unwinder vertex data and unwinder plane data. The unwinder vertex data is data corresponding to the above-described grid point $G^{uw}_i$ in the unwinder model 4M. The unwinder plane data is data corresponding to the above-described plane $S^{uw}_i$ in the unwinder model 4M. The unwinder surface data associates the unwinder vertex data and the unwinder plane data in the same manner as the web sheet surface mesh data. As a result, the unwinder 4 is modeled based on the unwinder surface mesh data and simulated as the unwinder model 4M.

Further, the winder information includes the winder shape data. The winder shape data is data indicating the shape of the winder 5. The winder shape data includes winder surface mesh data and data regarding a rotation axis of the winder. The winder surface mesh data includes winder vertex data and winder plane data. The winder vertex data is data corresponding to the above-described grid point $G^w_i$ in the winder model 5M. The winder plane data is data corresponding to the above-described plane $S^w_i$ in the winder model 5M. The winder surface data associates the winder vertex data and the winder plane data in the same manner as the web sheet surface mesh data. As a result, the winder 5 is modeled based on the winder surface mesh data and simulated as the winder model 5M.

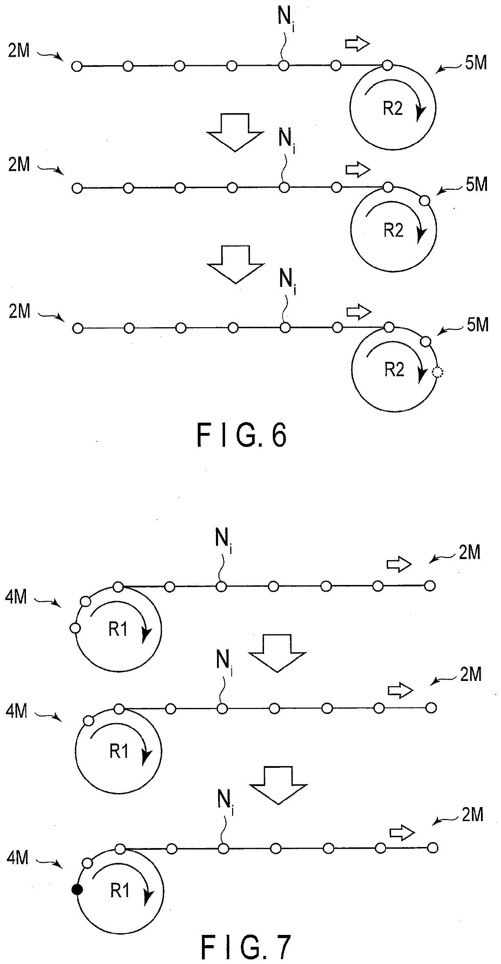

FIG. 6 is an explanatory diagram explaining a method of simulating a movement of the web sheet 2 being wound by the winder 5 when the web sheet 2 is conveyed in the simulation by the processing method according to the embodiment. FIG. 6 shows the web sheet model 2M and the winder model 5M in a posture viewed from one side in the lateral direction of the web sheet 2. When the web sheet 2 is wound by the winder 5, the web sheet 2 comes into contact with the winder 5 and the winder 5 rotates in one direction indicated by the arrow R2 to wind the web sheet 2. In the present embodiment, winding of the web sheet 2 by the winder 5 is described by, when the web sheet model 2M comes into contact with the winder model 5M, a portion of the web sheet model 2M that is in contact with the winder model 5M rotating together with the winder model 5M at a rotation velocity of the winder model 5M.

Specifically, the analysis unit 12 determines whether or not the web sheet model 2M contacts the winder model 5M in the same manner as it determines whether or not the web sheet 2 and the guide 6 are in contact with each other described above. The analysis unit 12 sets a velocity $v_i$ of an analysis node Ni in contact with the winder model 5M as a rotation velocity (a winding velocity) of the winder model 5M. The rotation velocity is calculated, for example, based on a conveyance velocity of the web sheet model 2M and a size in a radial direction of the winder model 5M. As a result, the analysis node Ni that comes into contact with the winder model 5M moves in synchronization with rotation of the winder model 5M for each time step of the simulation. Then, since the web sheet 2 is wound along with the rotation of the winder 5, the analysis unit 12 increases the size in the radial direction of the winder model 5M according to a rotation amount of the winder model 5M for each time step. For example, the analysis unit 12 increases a radius of the winder model 5M so that the radius of the winder model 5M increases by a thickness of the web sheet model 2M when the winder model 5M makes one rotation. In this way, the movement in which the web sheet model 2M is wound around the winder model 5M is simulated. When the analysis node Ni of the web sheet model 2M moves by a predetermined distance or more after coming into contact with the winder model 5M, that analysis node Ni is deleted (a white circle indicated by a broken line). When the analysis node Ni is deleted, an analysis node other than the analysis node Ni to be deleted must be in contact with the winder model 5M.

FIG. 7 is an explanatory diagram explaining a method of simulating a movement of the web sheet 2 being unwound from the unwinder 4 when the web sheet 2 is conveyed in the simulation by the processing method according to the embodiment. FIG. 7 shows the web sheet model 2M and the unwinder model 4M in a posture viewed from one side in the lateral direction of the web sheet 2. When the web sheet 2 is unwound from the unwinder 4, the unwinder 4 rotates in one direction indicated by the arrow R1 to unwind the web sheet 2 and the web sheet 2 separates from the unwinder 4. In the present embodiment, unwinding of the web sheet 2 by the unwinder 4 is described by a portion of the web sheet model 2M that is in contact with the unwinder model 4M rotating together with the unwinder model 4M at a rotation velocity of the unwinder model 4M.

Specifically, the analysis unit 12 determines whether or not the web sheet model 2M contacts the unwinder model 4M in the same manner as it determines whether or not the web sheet 2 and the guide 6 are in contact with each other described above. The analysis unit 12 sets a velocity vi of an analysis node Ni in contact with the unwinder model 4M as a rotation velocity (an unwinding velocity) of the unwinder model 4M. As the rotation velocity, for example, a rotation velocity of the unwinder 4 used in the actual web sheet conveying device 1 is set. As a result, the analysis node $N_i$ in contact with the unwinder model 4M moves in synchronization with rotation of the unwinder model 4M for each time step of the simulation. Then, since the web sheet 2 is unwound along with the rotation of the unwinder 4, the analysis unit 12 reduces the size of the unwinder model 4M in the radial direction according to a rotation amount of the unwinder model 4M for each time step. For example, the analysis unit 12 reduces the radius of the unwinder model 4M so that the radius of the unwinder model 4M decreases by the thickness of the web sheet model 2M when the unwinder model 4M makes one rotation. In this way, the movement of the web sheet model 2M being unwound from the unwinder model 4M is simulated. When the number of analysis nodes of the web sheet model 2M in contact with the unwinder model 4M becomes a predetermined number (the minimum number of contacts) or less, a new analysis node (indicated by a black circle) is added to the proximal end of the web sheet model 2M. The analysis node added at this time is added at a position in contact with the unwinder model 4M.

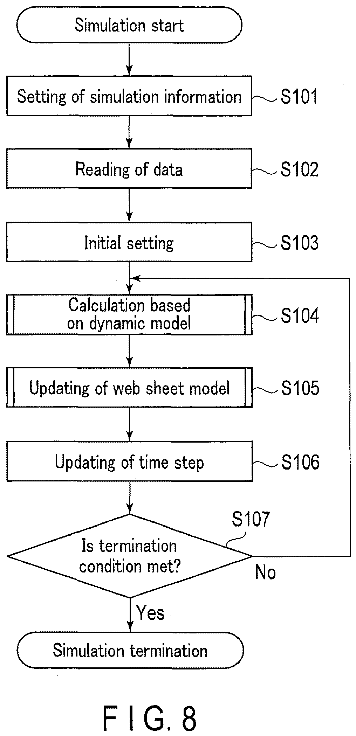

Next, the simulation executed by the simulation system 10 with the above-described processing method will be described using a flowchart. FIG. 8 is a flowchart showing an example of the simulation executed by the processing method according to the embodiment. Prior to a start of the simulation, the setting unit 11 sets simulation information required in the above-described simulation (S101). The set simulation information is, for example, stored in the storage unit 14. The analysis unit 12 reads the set simulation information from the storage unit 14 (S102). The analysis unit 12 executes initial setting of the simulation based on the read simulation information (S103). In the initial setting of the simulation, a simulation environment is constructed based on the web sheet information, the unwinder information, the winder information, and the guide information. For example, the analysis unit 12 sets information about the analysis node $N_i$ based on the web sheet surface data in the initial setting.

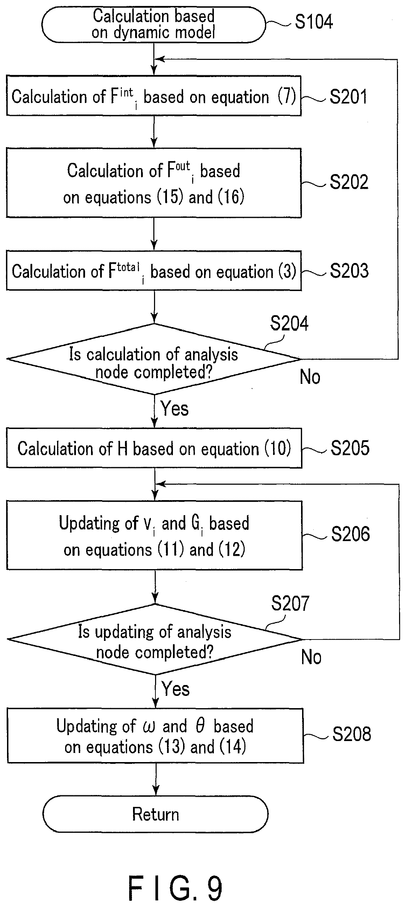

After the initial setting is completed, the analysis unit 12 executes the simulation. In this simulation, the analysis unit 12 executes the above-described calculation based on a dynamic model using the initially set information and the analysis node Ni (S104). The analysis unit 12 updates the web sheet model 2M based on the result calculated in S104 (S105). S104 and S105 will be described with reference to FIGS. 9 to 13 to be described later. The analysis unit 12 updates a time in the simulation by a predetermined time width $\Delta t$ by incrementing a time step (S106). The analysis unit 12 terminates the simulation when a simulation termination condition is met (S107-Yes). If the simulation termination condition is not met (S107-No), the process returns to S104, and the processes of S104 and the subsequent steps are sequentially executed.

The termination condition is, for example, a preset simulation termination time $t^{max}$. In the case of this example, the analysis unit 12 compares the time t in the simulation with the set simulation termination time $t^{max}$ (corresponding to S107). If the time t is the termination time $t^{max}$ (corresponding to S107-No) or less, the process returns to S104, and the processes of S104 and the subsequent steps are sequentially executed. If the time t exceeds the termination time $t^{max}$ (corresponding to S107-Yes), the simulation ends.

A specific processing method of S104 in FIG. 8 will be described. FIG. 9 is a flowchart showing an example of processing executed in the above-described calculation based on the dynamic model according to the embodiment. In this processing, the analysis unit 12 calculates $F^{int}_i$ based on equation (7) for a certain analysis node $N_i$ (S201), and calculates $F^{out}_i$ based on equations (8) and (9) (S202). Using the results of S201 and S202, the analysis unit 12 calculates $F^{total}_i$ based on equation (3) (S203). After S201 to S203 are completed for the certain analysis node $N_i$, if the calculations of S201 to S203 are not completed for an analysis node to be calculated (S204-No), the analysis unit 12 returns to the process of S201 and sequentially executes the processes of S201 and the subsequent steps. If the calculations of S201 to S203 are completed for the analysis node to be calculated (S204-Yes), the process proceeds to S205. The analysis unit 12 calculates a force H acting on the guide model 6M based on equation (10) (S205). The analysis unit 12 updates a velocity vi and a coordinate Gi of the certain analysis node Ni based on equations (11) and (12) (S206). If the process of S206 is not completed for any one of the analysis nodes to be calculated (S207-No), the analysis unit 12 returns to the process of S206 and sequentially executes the processes of S206 and the subsequent steps. If the process of S206 is completed for the analysis node to be calculated (S207-Yes), the analysis unit 12 updates an angular velocity ω and a rotation angle θ of the guide model 6M based on equations (13) and (14) (S208). In this way, the analysis unit 12 executes the processing method by the above-described calculation based on the dynamic model.

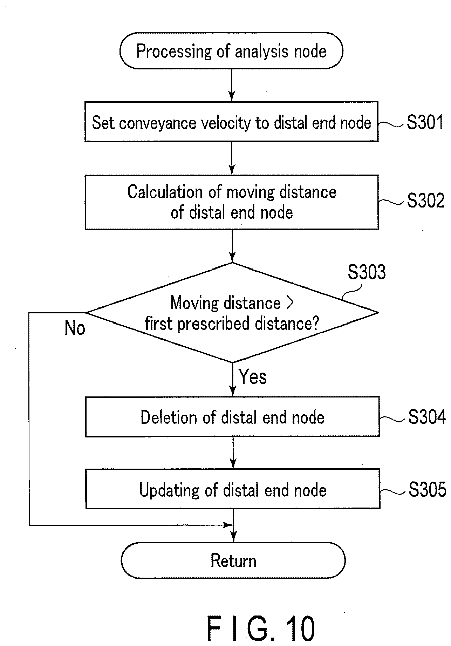

A specific processing method of S105 in FIG. 8 will be described with reference to FIGS. 10 to 13. In the updating of the web sheet model in S105, the process is executed based on the modeling of the unwinder 4 and/or the winder 5 described above. In the following descriptions, a process executed for a certain analysis node will be described. This process is executed for an analysis node to be processed among the analysis nodes included in the web sheet model 2M. The analysis node to be processed may be all the analysis nodes included in the web sheet model 2M, or may be a portion of the analysis nodes selected as a process target.

FIG. 10 is a flowchart showing an example of processing executed based on a method of modeling the movement of the winder 5 without openly using the winder model 5M. In this processing, the analysis unit 12 sets a conveyance velocity of the web sheet model 2M as a velocity of a distal end node (S301). Then, in a current time step, the analysis unit 12 calculates a moving distance traveled by a certain distal end node from a previous time step (S302). If the moving distance of that distal end node exceeds a first prescribed distance (S303-Yes), the analysis unit 12 deletes that distal end node from the web sheet model 2M (S304). The analysis unit 12 selects an analysis node located at a distal end of the web sheet model 2M as a distal end node, and updates the distal end node (S305). On the other hand, if the moving distance of that distal end node is the first prescribed distance or less(S303-No), the analysis unit 12 does not execute the processes of S304 and S305 for that distal end node. In this way, the analysis unit 12 executes a simulation that appropriately models the movement of the winder 5 without openly using the winder model 5M.

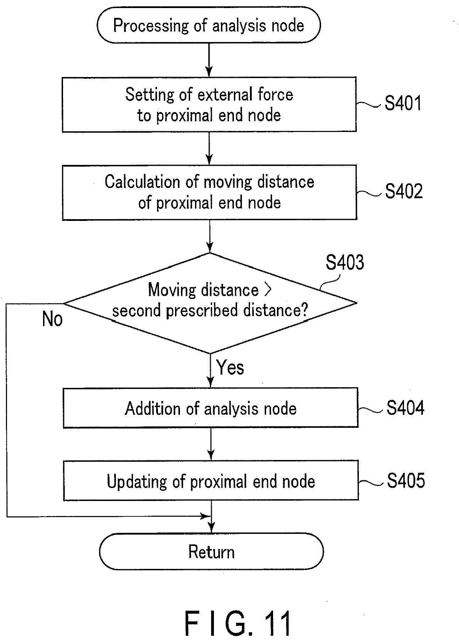

FIG. 11 is a flowchart showing an example of processing executed based on a method of modeling the movement of the unwinder 4 without openly using the unwinder model 4M. In this processing, the analysis unit 12 sets a predetermined external force to a proximal end node (S401). Then, in a current time step, the analysis unit 12 calculates a moving distance traveled by a certain proximal end node from a previous time step (S402). If the moving distance of that proximal end node exceeds a second prescribed distance (S403-Yes), the analysis unit 12 adds a new analysis node to the web sheet model 2M in a direction opposite to the conveying direction from that proximal end node (S404). The analysis unit 12 selects an analysis node located at a proximal end of the web sheet model 2M as a proximal end node, and updates the proximal end node (S405). Further, if the moving distance of that proximal end node is the second prescribed distance or less (S403-No), the analysis unit 12 does not execute the processes of S404 and S405. In this way, the analysis unit 12 executes a simulation that appropriately models the movement of the unwinder 4 without openly using the unwinder model 4M.

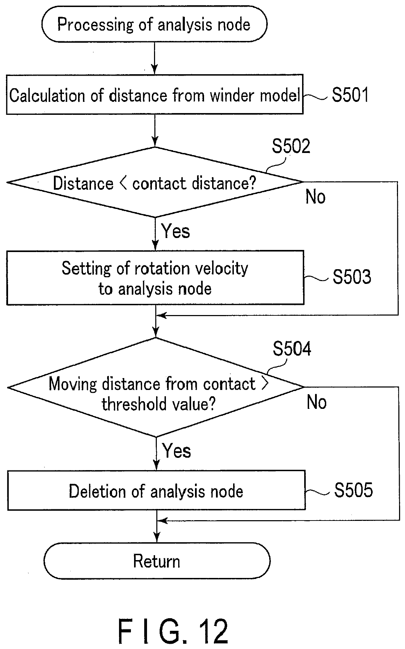

FIG. 12 is a flowchart showing an example of processing executed based on a method of modeling the movement of the winder 5 by openly using the winder model 5M. In this processing, the analysis unit 12 calculates a distance between a certain analysis node and the winder model 5M (S501). If a distance between that analysis node and the winder model 5M is less than a contact distance (S502-Yes), the analysis unit 12 sets a predetermined rotation velocity as a velocity of that analysis node (S503). If the distance between that analysis node and the winder model 5M is the contact distance or more (S502-No), the analysis unit 12 does not execute the process of S503. That is, the analysis unit 12 does not change the velocity of that analysis node. Further, if a distance traveled by that analysis node from a time when the distance between that analysis node and the winder model 5M becomes the contact distance exceeds a predetermined threshold value (S504-Yes), the analysis unit 12 deletes that analysis node (S505). If that moving distance is the predetermined threshold value or less (S504-No), the analysis unit 12 does not execute the process of S505. That is, the analysis unit 12 maintains that analysis node. In this way, the analysis unit 12 executes a simulation that appropriately models the movement of the winder 5 by openly using the winder model 5M.

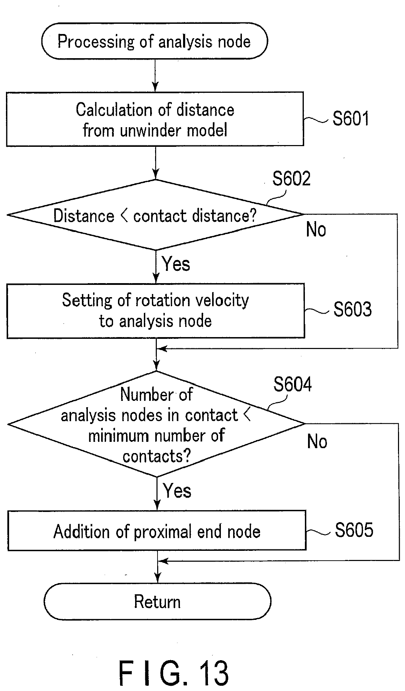

FIG. 13 is a flowchart showing an example of processing executed based on a method of modeling the movement of the unwinder 4 by openly using the unwinder model 4M. In this processing, the analysis unit 12 calculates a distance between a certain analysis node and the unwinder model 4M (S601). If the distance between that analysis node and the unwinder model 4M is less than a contact distance (S602-Yes), the analysis unit 12 sets a predetermined rotation velocity as a velocity of that analysis node (S603). If the distance between the analysis node and the winder model 5M is the contact distance or more (S602-No), the analysis unit 12 does not execute the process of S603. That is, the analysis unit 12 does not change the velocity of that analysis node. If the number of analysis nodes is less than a predetermined minimum number of contacts (S604-Yes), the analysis unit 12 adds a new analysis node as a proximal end node to a proximal end of the web sheet model 2M (S605). If the number of analysis nodes is the predetermined minimum number of contacts or more (S604-No), the analysis unit 12 does not execute the process of S605. That is, the analysis unit 12 does not add a new analysis node. In this way, the analysis unit 12 executes a simulation that appropriately models the movement of the unwinder 4 by openly using the unwinder model 4M.

As described above, in the processing method of the present embodiment, as a velocity of a distal end node, which is an analysis node located at a distal end of the web sheet 2 in a conveying direction, a conveyance velocity along the conveying direction is set. Then, after setting the conveyance velocity to the distal end node, the distal end node is deleted based on the fact that the distal end node has moved by the first prescribed distance. Further, based on the deletion of the distal end node, the distal end node is updated to an analysis node newly located at a distal end of the web sheet 2. This makes it possible to appropriately simulate the movement of the web sheet 2 being wound by the winder 5 in the roll-to-roll type web sheet conveyance.

In the processing method of the present embodiment, as a velocity of a distal end node, based on the fact that an analysis node newly contacts winder surface data, a winding velocity is set to the analysis node newly in contact with the winder surface data. This makes it possible to appropriately simulate a behavior of the web sheet 2 being wound around the winder 5 when the winder 5 is represented by the winder surface data in the roll-to-roll type web sheet conveyance.

In the processing method of the present embodiment, a radial size of the winder surface data increases with time according to contact with an analysis node. This makes it possible to appropriately simulate a change in the winder 5 due to the winding of the web sheet 2 in the roll-to-roll type web sheet conveyance.

In the processing method of the present embodiment, a force applied in a direction opposite to the conveying direction is set to a proximal end node, which is an analysis node located at a proximal end of the web sheet 2 in the direction opposite to the conveying direction. Then, after setting the force to the proximal end node, based on the fact that the proximal end node has moved by the second prescribed distance, an analysis node is added to a side opposite to the conveying direction with respect to the proximal end node. Also, based on the addition of the analysis node, the proximal end node is updated to the newly added analysis node. This makes it possible to appropriately simulate the movement of the web sheet 2 being unwound from the unwinder 4 in the roll-to-roll type web sheet conveyance.

In the processing method of the present embodiment, based on the fact that the number of analysis nodes in contact with the unwinder surface data is less than the minimum number of contacts, an analysis node is added to the side opposite to the conveying direction with respect to the proximal end node. Then, based on the addition of the analysis node, the proximal end node is updated to the newly added analysis node. Also, an unwinding velocity is set to the proximal end node based on the updating of the proximal end node. This makes it possible to appropriately simulate the behavior of the web sheet 2 being unwound from the unwinder 4 when the unwinder 4 is represented by the unwinder surface data in the roll-to-roll type web sheet conveyance.

In the processing method of the present embodiment, a radial size of the unwinder surface data decreases with time according to an addition of an analysis node. This makes it possible to appropriately simulate a change in the unwinder 4 due to the unwinding of the web sheet 2 in the roll-to-roll type web sheet conveyance.

(Modification)

In one example, the guide 6 may be movable by a tension difference with the web sheet 2 by applying a predetermined external force to the guide 6. That is, a position of the guide surface data is moved based at least on a force received by the guide 6 from the web sheet 2. In this case, the guide 6 is, for example, a dancer roller. When the external force of this modification is applied to the guide 6B of FIG. 1, the external force of this modification is applied toward a direction opposite to the guide 6A. That is, when the web sheet 2 is conveyed from the guide 6A through the guide 6B to the guide 6C, the external force is applied to the guide 6B in a direction opposite to a direction (a direction from the guide 6B toward the guides 6A and 6C side) of a force applied by the web sheet 2 to the guide 6B. As a result, the guide 6 maintains a state in which a predetermined tension is applied to the web sheet 2, thereby suppressing the web sheet 2 of the web sheet conveying device 1 from loosening.

When this external force is applied to the guide model 6M, the setting unit 11 sets the mass mg of the guide 6 as the guide physical property data and sets a conveyance parameter related to a tension as guide information. Since the external force of this modification is applied to the guide model 6M, the external force can be incorporated into the simulation of the guide model 6M by changing the above equation (10) to equation (15). Here, $H^{out}$ is an external force applied to the guide model 6M from the outer portion.

$$H = -\sum_{i \in CN} F^{out}_i + H^{out} \qquad (15)$$

By changing equation (10) to equation (15), in the simulation of this modification, an analysis node contacting the guide model 6M receives a force of the same magnitude as $H^{out}$ from the guide model 6M. Thus, in the analysis node contacting the guide model 6M, the external force $F^{out}_i$ expressed by equation (8) is changed to equation (16).

$$F^{\text{out}}{}_i = -m_i(n \cdot A_i)n + \Gamma_i - H^{\text{out}} \qquad (i \in CN) \qquad (1\,6)$$

As a result, the guide model 6M moves according to equations (17) and (18). Here, $G^g_i$ represents a grid point (a coordinate or position) of the guide model 6M, and $v^g_i$ represents a velocity at the grid point $G^g_i$ of the guide model 6M.

$$v^g{}_i(k^{\text{step}} + 1) = v^g{}_i(k^{\text{step}}) + \frac{\Delta t}{m^g} H \qquad (1\,7)$$

$$G^g{}_i(k^{\text{step}} + 1) = G^g{}_i(k^{\text{step}}) + v^g{}_i(k^{\text{step}} + 1)\Delta t \qquad (1\,8)$$

As described above, in this modification, a simulation when the guide 6 moves can be executed by considering the external force applied to the guide model 6M in the simulation. Further, since the present modification also has the same configuration as that of the above-described embodiment, the effect of the above-described embodiment can be obtained.

The processing method of at least one of these embodiments simulates conveyance of at least one web sheet that is conveyed in a conveying direction along a conveyance path from an unwinder to a winder. The processing method deletes a distal end node based on the fact that the distal end node, which is an analysis node located at a distal end of the web sheet in the conveying direction, has moved by a first prescribed distance. The processing method updates the distal end node to the analysis node newly located at the distal end of the web sheet due to the deletion of the distal end node. The processing method sets a conveyance velocity along the conveying direction as a velocity of the distal end node based on the updating of the distal end node. Thereby, it is possible to provide a processing method, a processing device, and a processing program capable of appropriately simulating roll-to-roll type web sheet conveyance.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. A processing method of simulating conveyance of at least one web sheet (2) conveyed in a conveying direction along a conveyance path (3) from an unwinder (4) to a winder (5), the method comprising:

   setting a conveyance velocity along the conveying direction as a velocity of a distal end node, which is an analysis node located at a distal end of the web sheet (2) in the conveying direction;
   after setting the conveyance velocity to the distal end node, deleting the distal end node based on a movement of the distal end node by a first prescribed distance (d1); and
   based on the deletion of the distal end node, updating the distal end node to an analysis node newly located at a distal end of the web sheet (2).

2. The processing method according to claim 1, further comprising:

   setting winder surface data based on a shape of the winder (5) formed along a longitudinal direction intersecting the conveying direction; and
   rotating the winder surface data around a rotation axis along the longitudinal direction at a winding velocity, wherein setting the conveyance velocity along the conveying direction includes setting, based on the analysis node newly contacting the winder surface data, the winding velocity to the analysis node newly contacting the winder surface data.

3. The processing method according to claim 2, wherein a radial size of the winder surface data increases according to a rotation amount of the winder (5).

4. The processing method according to any one of claims 1 to 3, further comprising:

setting a force (T) applied toward a direction opposite to the conveying direction to a proximal end node, which is an analysis node located at a proximal end of the web sheet (2) in the direction opposite to the conveying direction;
after setting the force (T) to the proximal end node, adding an analysis node to a side opposite to the conveying direction with respect to the proximal end node based on a movement of the proximal end node by a second prescribed distance (d2); and
based on the addition of the analysis node, updating the proximal end node to the analysis node newly added.

5. The processing method according to claim 1 or 2, further comprising:

setting unwinder surface data based on a shape of the unwinder (4) formed along the longitudinal direction intersecting the conveying direction;
rotating the unwinder surface data around a rotation axis along the longitudinal direction at an unwinding velocity;
based on a number of analysis nodes contacting the unwinder surface data becoming less than a minimum number of contacts, adding an analysis node to a side opposite to the conveying direction with respect to a proximal end node, which is an analysis node located at a proximal end of the web sheet (2);
based on the addition of the analysis node, updating the proximal end node to the analysis node newly added; and
based on the updating of the proximal end node, setting the unwinding velocity to the proximal end node.

6. The processing method according to claim 5, wherein a radial size of the unwinder surface data decreases according to a rotation amount of the unwinder (4).

7. The processing method according to any one of claims 1 to 4, further comprising:

setting guide surface data based on a shape of a guide (6) provided on the conveyance path (3), contacting the web sheet (2), and formed along the longitudinal direction intersecting the conveying direction; and
moving a position of the guide surface data based at least on a force received by the guide (6) from the web sheet (2).

8. A processing device which simulates conveyance of at least one web sheet (2) conveyed in a conveying direction along a conveyance path (3) from an unwinder (4) to a winder (5), the processing device comprising a processor configured to:

set a conveyance velocity along the conveying direction as a velocity of a distal end node, which is an analysis node located at a distal end of the web sheet (2) in the conveying direction;
after setting the conveyance velocity to the distal end node, delete the distal end node based on a movement of the distal end node by a first prescribed distance (d1); and
based on the deletion of the distal end node, update the distal end node to an analysis node newly located at a distal end of the web sheet (2).

9. A processing program for simulating conveyance of at least one web sheet (2) conveyed in a conveying direction along a conveyance path (3) from an unwinder (4) to a winder (5), the program causing a computer to:

set a conveyance velocity along the conveying direction as a velocity of a distal end node, which is an analysis node located at a distal end of the web sheet (2) in the conveying direction;
after setting the conveyance velocity to the distal end node, delete the distal end node based on a movement of the distal end node by a first prescribed distance (d1); and
based on the deletion of the distal end node, update the distal end node to an analysis node newly located at a distal end of the web sheet (2).

EP 4 102 393 A1

F I G. 1

F I G. 2

F I G. 3

FIG. 4

F I G. 5

F I G. 6

F I G. 7

EP 4 102 393 A1

Simulation start

Setting of simulation information — S101

Reading of data — S102

Initial setting — S103

Calculation based
on dynamic model — S104

Updating of web sheet model — S105

Updating of time step — S106

S107
Is termination
condition met?

No

Yes

Simulation termination

F I G. 8

```
        ┌─────────────────────────┐
        │   Calculation based     │──── S104
        │   on dynamic model      │
        └─────────────────────────┘
                     │
                     ▼  ◄──────────────────────────┐
    ┌──────────────────────────────────────┐        │
    │ Calculation of F^int_i based on       │── S201 │
    │ equation (7)                          │        │
    └──────────────────────────────────────┘        │
                     │                               │
                     ▼                               │
    ┌──────────────────────────────────────┐        │
    │   Calculation of F^out_i based        │        │
    │   on equations (15) and (16)          │── S202 │
    └──────────────────────────────────────┘        │
                     │                               │
                     ▼                               │
    ┌──────────────────────────────────────┐        │
    │ Calculation of F^total_i based on     │── S203 │
    │ equation (3)                          │        │
    └──────────────────────────────────────┘        │
                     │                   S204        │
                     ▼                               │
              ╱─────────────────╲                    │
             ╱  Is calculation    ╲   No             │
            ◄   of analysis        ►────────────────┘
             ╲  node completed?   ╱
              ╲─────────────────╱
                     │ Yes
                     ▼
    ┌──────────────────────────────────────┐
    │ Calculation of H based on equation    │── S205
    │ (10)                                  │
    └──────────────────────────────────────┘
                     │                  ◄──────────┐
                     ▼                             │
    ┌──────────────────────────────────────┐      │
    │   Updating of V_i and G_i based       │── S206
    │   on equations (11) and (12)          │      │
    └──────────────────────────────────────┘      │
                     │                   S207      │
                     ▼                             │
              ╱─────────────────╲                  │
             ╱  Is updating of    ╲  No             │
            ◄   analysis node      ►───────────────┘
             ╲  completed?        ╱
              ╲─────────────────╱
                     │ Yes
                     ▼
    ┌──────────────────────────────────────┐
    │   Updating of ω and θ based           │── S208
    │   on equations (13) and (14)          │
    └──────────────────────────────────────┘
                     │
                     ▼
        ┌─────────────────────────┐
        │        Return           │
        └─────────────────────────┘
```

# FIG. 9

```
                  ┌───────────────────────────┐
                  │   Processing of analysis node │
                  └───────────────────────────┘
                               │
                               ▼
            ┌──────────────────────────────────────┐
            │ Set conveyance velocity to distal end node │─── S301
            └──────────────────────────────────────┘
                               │
                               ▼
            ┌──────────────────────────────────────┐
            │      Calculation of moving distance      │
            │           of distal end node            │── S302
            └──────────────────────────────────────┘
                               │
                               ▼
                                              S303
                       ╱╲
                      ╱  ╲
        No     ╱  Moving distance >  ╲
     ┌───────╱  first prescribed distance?  ╲
     │       ╲                              ╱
     │        ╲                            ╱
     │          ╲                        ╱
     │            ╲╱
     │             │ Yes
     │             ▼
     │   ┌──────────────────────────────────┐
     │   │      Deletion of distal end node      │── S304
     │   └──────────────────────────────────┘
     │             │
     │             ▼
     │   ┌──────────────────────────────────┐
     │   │     Updating of distal end node      │── S305
     │   └──────────────────────────────────┘
     │             │
     └─────────────┤
                   ▼
            ┌──────────────┐
            │    Return    │
            └──────────────┘
```

# F I G. 10

```
        ╭─────────────────────────────╮
        │ Processing of analysis node │
        ╰─────────────────────────────╯
                       │
                       ▼
        ┌─────────────────────────────┐
        │    Setting of external force │ ~S401
        │     to proximal end node     │
        └─────────────────────────────┘
                       │
                       ▼
        ┌─────────────────────────────┐
        │  Calculation of moving distance │ ~S402
        │      of proximal end node    │
        └─────────────────────────────┘
                       │
                       ▼
                    ╱◇╲              S403
                  ╱      ╲         ╱
       No       ╱ Moving distance > ╲
     ◄─────────╱ second prescribed distance? ╲
               ╲                    ╱
                 ╲                ╱
                   ╲            ╱
                       │ Yes
                       ▼
        ┌─────────────────────────────┐
        │    Addition of analysis node │ ~S404
        └─────────────────────────────┘
                       │
                       ▼
        ┌─────────────────────────────┐
        │   Updating of proximal end node │ ~S405
        └─────────────────────────────┘
                       │
                       ▼
        ╭─────────────────────────────╮
        │           Return            │
        ╰─────────────────────────────╯
```

# F I G. 11

Processing of analysis node

Calculation of distance from winder model ~S501

Distance < contact distance? S502

No

Yes

Setting of rotation velocity
to analysis node ~S503

Moving distance from contact >
threshold value? S504

No

Yes

Deletion of analysis node ~S505

Return

F I G. 12

F I G. 13

Application Number

EP 22 15 8507

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Kandadai Balaji Kovil: "The development of Wound-On-Tension in webs wound into rolls", , 1 July 2006 (2006-07-01), XP055958397, ISBN: 978-0-549-77095-4 Retrieved from the Internet: URL:https://core.ac.uk/download/pdf/215275667.pdf [retrieved on 2022-09-07] * page 1 - page 3 * * page 26 - page 73 * * figure 5.2 * * page 76 - page 87 * ----- | 1-9 | INV. G06F30/20 ADD. G06F113/24 G06F119/14 |
| X | US 7 421 381 B2 (CANON KK [JP]) 2 September 2008 (2008-09-02) * abstract * * figures 2-7 * * column 7 - column 9 * ----- | 1-9 | |
| X | YANABE SHIGEO ET AL: "Web Winding Simulation and Wound Roll Stresses", JOURNAL OF ADVANCED MECHANICAL DESIGN, SYSTEMS, AND MANUFACTURING, [Online] vol. 4, no. 1, 26 February 2010 (2010-02-26), pages 281-289, XP055957899, DOI: 10.1299/jamdsm.4.281 Retrieved from the Internet: URL:https://www.jstage.jst.go.jp/article/jamdsm/4/1/4_1_281/_article> [retrieved on 2022-09-07] * abstract * * page 282 - page 288 * ----- -/-- | 1-9 | TECHNICAL FIELDS SEARCHED (IPC) G06F |

The present search report has been drawn up for all claims

| Place of search | Date of completion of the search | Examiner |
|---|---|---|
| Munich | 7 September 2022 | Radev, Boyan |

page 1 of 2

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 700 364 B2 (LOONEY MICHAEL TIMOTHY [US]; LI LEI [US] ET AL.) 15 April 2014 (2014-04-15) * abstract * * column 1, line 13 - line 18 * * column 5, line 39 - column 11, line 6 * ----- | 1-9 | |

TECHNICAL FIELDS
SEARCHED      (IPC)

The present search report has been drawn up for all claims

| Place of search | Date of completion of the search | Examiner |
|---|---|---|
| Munich | 7 September 2022 | Radev, Boyan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 15 8507

This annex lists the patent family members relating to the patent documents cited in the above-mentioned European search report.
The members are as contained in the European Patent Office EDP file on
The European Patent Office is in no way liable for these particulars which are merely given for the purpose of information.

07-09-2022

| Patent document cited in search report | | Publication date | Patent family member(s) | | Publication date |
|---|---|---|---|---|---|
| US 7421381 | B2 | 02-09-2008 | JP | 4095603 B2 | 04-06-2008 |
| | | | JP | 2006103878 A | 20-04-2006 |
| | | | KR | 20060051987 A | 19-05-2006 |
| | | | US | 2006074613 A1 | 06-04-2006 |
| US 8700364 | B2 | 15-04-2014 | NONE | | |

For more details about this annex : see Official Journal of the European Patent Office, No. 12/82